(19) Europäisches Patentamt
European Patent Office
Office européen des brevets

(11) Veröffentlichungsnummer: 0 299 348
A2

(12) **EUROPÄISCHE PATENTANMELDUNG**

(21) Anmeldenummer: 88110773.4

(51) Int. Cl.4: C08G 63/68 , C08G 63/30

(22) Anmeldetag: 06.07.88

(30) Priorität: 11.07.87 DE 3723068

(43) Veröffentlichungstag der Anmeldung:
18.01.89 Patentblatt 89/03

(84) Benannte Vertragsstaaten:
DE FR GB IT NL

(71) Anmelder: HOECHST AKTIENGESELLSCHAFT
Postfach 80 03 20
D-6230 Frankfurt am Main 80(DE)

(72) Erfinder: Hofinger, Manfred, Dr.
Rossfeldstrasse 7a
D-8269 Burgkirchen(DE)
Erfinder: Schellenberg, Horst
Lindenweg 10
D-8261 Emmerting(DE)

(54) **Verfahren zur Herstellung von Polykondensationsverbindungen aus oxalkylierten Fettaminen, Diolen und aliphatischen Dicarbonsäuren.**

(57) Es wird ein Verfahren zur Herstellung von Polykondensationsverbindungen aus einem oxalkylierten primären Fettamin, einem Diol und einer aliphatischen Dicarbonsäure beschrieben, bei dem ein oxalkyliertes primäres Fettamin und ein Diol mit einer aliphatischen Dicarbonsäure in Gegenwart eines Katalysators umgesetzt wird, wobei als Katalysator eine metallorganische Verbindung eines Metalles aus der Titangruppe eingesetzt wird und zusätzlich dazu gegebenenfalls ein Lösungsmittel für den Katalysator und eine Mineralsäure oder Sulfonsäure. Mit dem neuen Verfahren werden im Vergleich zum Stand der Technik wesentlich kürzere Reaktionszeiten bei der in Rede stehenden Veresterungsreaktion erreicht.

EP 0 299 348 A2

# Verfahren zur Herstellung von Polykondensationsverbindungen aus oxalkylierten Fettaminen, Diolen und aliphatischen Dicarbonsäuren

Die Erfindung betrifft ein Verfahren zur Herstellung von Polykondensationsverbindungen aus einem oxalkylierten primären Fettamin, einem Diol und einer aliphatischen Dicarbonsäure durch Reaktion (Veresterung) eines oxalkylierten primären Fettamins und eines Diols mit einer aliphatischen Dicarbonsäure in Gegenwart eines Katalysators.

Ein solches Verfahren ist aus den beiden Druckschriften DE 35 26 600 A1 und DE 35 26 601 A1 bekannt. Dabei wird die unter Polykondensation verlaufende Veresterung in Gegenwart eines sauren Katalysators durchgeführt. Mit Hilfe des sauren Katalysators wie para-Toluolsulfonsäure und hypophosphorige Säure soll die Reaktion beschleunigt und damit eine kürzere Reaktionszeit erreicht werden. Diese liegt aber immer noch bei etwa 20 Stunden, was einen nicht zu übersehenden Nachteil des bekannten Verfahrens darstellt.

Es wurde nun gefunden, daß bei Verwendung von organischen Verbindungen der Elemente der Titangruppe als Katalysator bei der in Rede stehenden Veresterungsreaktion eine im Vergleich zu Säure als Katalysator wesentlich kürzere Reaktionszeit erreicht wird.

Das erfindungsgemäße Verfahren zur Herstellung von Polykondensationsverbindungen aus einem oxalkylierten primären Fettamin, einem Diol und einer aliphatischen Dicarbonsäure durch Reaktion eines oxalkylierten primären Fettamins und eines Diols mit einer aliphatischen Dicarbonsäure in Gegenwart eines Katalysators ist dadurch gekennzeichnet, daß als Katalysator mindestens eine organische Verbindung eines Metalles aus der Gruppe Titan, Zirkon, Hafnium und Thorium eingesetzt wird.

Von den angegebenen neuen Katalysatoren werden vorzugsweise die titanorganischen Verbindungen eingesetzt (mit vorzugsweise vierwertigem Titan). Unter diesen sind jene aus der Gruppe der Alkyltitanate (monomere Alkyltitanate oder Titansäureester) und Alkylpolytitanate (polymere Alkyltitanate oder polymere Titansäureester) bevorzugt. Alkyltitanate der Formel $Ti(OR)_4$, worin R ein Alkylrest mit 1 bis 18 Kohlenstoffatomen ist, vorzugsweise mit 1 bis 6 Kohlenstoffatomen, und Alkylpolytitanate der Formel $RO-[Ti(OR)_2O]_n-R$, worin R die oben genannte Bedeutung hat und n eine (ganze) Zahl von 1 bis 10 ist, vorzugsweise von 4 bis 7, sind besonders bevorzugte Katalysatoren; sowohl in der ersten als auch in der zweiten Formel sind die Alkylreste vorzugsweise gleich. Als Beispiele für titanorganische Verbindungen seien genannt:

Methyltitanat: $(CH_3O)_4Ti$
Ethyltitanat: $(C_2H_5O)_4Ti$
Isopropyltitanat: $[(CH_3)_2CHO]_4Ti$
n-Butyltitanat: $(CH_3CH_2CH_2CH_2O)_4Ti$
n-Hexyltitanat: $(C_6H_{13}O)_4Ti$
Stearyltitanat: $(C_{18}H_{37}O)_4Ti$
n-Butyltitanat-polymer (Butylpolytitanat): $(C_4H_9O)[Ti(OC_4H_9)_2O]_nC_4H_9$, n = 4-7.

Die erfindungsgemäß einzusetzenden Katalysatoren stellen bei Raumtemperatur feste (pulverförmige), flüssige oder wachsartige Produkte dar und sind im Handel erhältlich.

Die Menge an erfindungsgemäß einzusetzender metallorganischer Verbindung kann innerhalb eines weiten Bereiches variieren. Der allgemeine Bereich liegt in der Regel bei 0,05 bis 2 Gew.-% und der bevorzugte Bereich bei 0,1 bis 1 Gew.-%, Gewichtsprozente bezogen auf die Gewichtssumme der 3 eingesetzten Reaktionskomponenten, oxalkyliertes primäres Fettamin, Diol und aliphatische Dicarbonsäure.

Es ist ferner gefunden worden, daß die Wirkung der beschriebenen metallorganischen Katalysatoren bezüglich Verkürzung der Reaktionszeit erhöht wird, wenn sie in Kombination mit einem inerten Lösungsmittel eingesetzt werden, in dem sie gelöst oder dispergiert (fein verteilt) vorliegen. Es ist anzunehmen, daß der erhöhte Effekt durch das Lösungsmittel unter anderem darauf beruht, daß mit seiner Hilfe eine besonders gute Verteilung des metallorganischen Katalysators im Reaktionsgemisch erreicht wird. Als Lösungsmittel werden vorzugsweise aromatische Kohlenwasserstoffe oder Mischungen davon eingesetzt, die bei Raumtemperatur flüssig sind. Die Art des aromatischen Kohlenwasserstoffes ist an sich nicht kritisch. Bevorzugt sind solche, deren Siedepunkt im Bereich von 190 bis 250 °C liegt, weil die in Rede stehende Veresterung, wie später näher beschrieben wird, vorzugsweise bei einer Temperatur von 150 bis 180 °C und unter Abtrennung des entstehenden Reaktionswassers durchgeführt wird. Beispiele für aromatische Kohlenwasserstoffe mit relativ niedrigen Siedepunkten sind Benzol, Toluol (Methylbenzol), Xylol (Dimethylbenzole), Cumol (Isopropylbenzol) und Cymol (Isopropyl-methyl-benzole). Beispiele für solche mit höheren Siedepunkte und deshalb bevorzugte Vertreter (einzeln oder in Mischung) sind: Diethylbenzol, Diethylmethyl-benzol, Tetramethylbenzol, Diisopropylbenzol, Triethylbenzol und Di.-tert.-butylbenzol. Die in Rede stehenden aromatischen Kohlenwasserstoffe sind im Handel erhältlich; die höher siedenden werden

beispielsweise unter der Bezeichnung Shellsol® angeboten (® = eingetragenes Warenzeichen von Shell).

Die Menge an erfindungsgemäß einzusetzendem Lösungsmittel kann in weiten Grenzen variieren. Nachdem mit dem inerten Lösungsmittel eine gute Verteilung (Lösung oder Dispergierung) des metallorganischen Katalysators im Reaktionsansatz erreicht werden soll, richtet sich die Lösungsmittelmenge insbesondere nach diesem Ziel. Nachdem andererseits die in Rede stehende Veresterung, wie später näher beschrieben wird, vorzugsweise im wesentlichen in Substanz durchgeführt wird, wird erfindungsgemäß eine relativ geringe Menge an inertem Lösungsmittel eingesetzt. Die Menge an Lösungsmittel liegt daher im allgemeinen im Bereich von 0,1 bis 5 Gew.-%, vorzugsweise 0,5 bis 2 Gew.-%, Gewichtsprozente bezogen auf die Gewichtssumme der drei eingesetzten Reaktionskomponenten, oxalkyliertes primäres Fettamin, Diol und aliphatische Dicarbonsäure.

Es hat sich herausgestellt, daß die Wirkung der erfindungsgemäßen Kombination von metallorganischem Katalysator und einem inerten Lösungsmittel (Dispergiermittel) für den Katalysator noch weiter erhöht werden kann, wenn zusätzlich eine geringe Menge einer Mineral- oder Sulfonsäure eingesetzt wird. Mit der erfindungsgemäßen Dreierkombination, das sind metallorganische Verbindung, Lösungsmittel und Sulfon- oder Mineralsäure, wird also eine noch weitere Verkürzung der Reaktionszeit bei der in Rede stehenden Veresterung erreicht. Als Katalysatorsäuren werden vorzugsweise Phosphorsäuren wie unterphosphorige Säure ($H_3PO_2$), phosphorige Säure ($H_3PO_3$) oder Phosphorsäure ($H_3PO_4$) und aliphatische oder aromatische Sulfonsäuren wie Methansulfonsäure, Benzolsulfonsäure oder Toluolsulfonsäuren eingesetzt. Die Menge an Säure liegt im allgemeinen bei 0,05 bis 2 Gew.-%, vorzugsweise 0,1 bis 1 Gew.-%, Gewichtsprozente bezogen auf die Gewichtssumme der drei eingesetzten Reaktionskomponenten, oxalkyliertes primäres Fettamin, Diol und aliphatische Dicarbonsäure.

Die Durchführung des erfindungsgemäßen Verfahrens erfolgt bevorzugt in der Weise, daß die drei Reaktionskomponenten, oxalkyliertes primäres Fettamin, Diol und aliphatische Dicarbonsäure, und der erfindungsgemäß einzusetzende metallorganische Katalysator sowie gegebenenfalls das Lösungsmittel und die Säure in einem Reaktionsgefäß auf 140 bis 220 °C, vorzugsweise 150 bis 180 °C, unter Rühren erhitzt werden und die im wesentlichen in Substanz vorliegende Mischung bei dieser Temperatur unter Rühren und Entfernung des Reaktionswassers, gegebenenfalls mit Vakuum, bis zur Beendigung der Veresterung gehalten wird (vorzugsweise Wasserstrahlvakuum mit einem Wert von 0,04 bis 0,08 MPa). Der Verlauf und das Ende der Reaktion ergibt sich aus der Menge des ausgetragenen Reaktionswassers, aus der Bestimmung der Amin- und Säurezahl und/oder aus der gewünschten Viskosität des angestrebten Polykondensates. Eine Reinigung des erhaltenen Polykondensates,beispielsweise die Abtrennung des eingesetzten Lösungsmittels, des Katalysators und/oder der Mineralsäure,ist im Hinblick auf die bevorzugte Verwendung des Polykondensates in der Regel nicht erforderlich.

Die Viskosität der nach dem erfindungsgemäßen Verfahren hergestellten Polykondensationsverbindungen oder oxalkylierten Polyesteramine liegen in der Regel im Bereich von etwa 1 500 bis etwa 60 000 mPa.s. Sie stellen gelb- bis braungefärbte, bei Raumtemperatur flüssige und mehr oder weniger viskose Produkte dar. Sie werden vorzugsweise als Demulgatoren für Erdölemulsionen (Erdölspalter) verwendet. Die in Rede stehenden Polykondensationsverbindungen können, wie in der eingangs genannten Druckschrift DE 35 26 600 A1 beschrieben wird, quaternisiert werden. Die daraus resultierenden quaternären Polykondensate sind ebenfalls vorteilhafte Demulgatoren für die Spaltung von Rohölemulsionen; sie besitzen darüber hinaus eine hohe korrosionsinhibierende Wirkung.

Der Vorteil des erfindungsgemäßen Verfahrens, im Vergleich zu den bekannten, liegt insbesondere darin, daß eine wesentliche Verkürzung der Reaktionszeit (bei gleicher Reaktionstemperatur und bei etwa gleich hohem Umsetzungsgrad) erreicht wird.

So liegt die Reaktionszeit bei der oben als bevorzugt beschriebenen erfindungsgemäßen Verfahrensweise im Bereich von bis zu etwa 10 Stunden. Nachdem die Reaktionszeit des bekannten Verfahrens bei der gleichen Reaktionstemperatur etwa 20 Stunden beträgt, wird mit dem erfindungsgemäßen Verfahren eine mindestens 50%ige Verkürzung erreicht.

Im folgenden seien noch die drei Ausgangsverbindungen und die damit erhaltenen Polykondensate näher beschrieben, obwohl diesbezüglich auf die eingangs genannten beiden Druckschriften verwiesen werden könnte.

Aufgrund der beim erfindungsgemäßen Verfahren bevorzugt eingesetzten oxalkylierten primären Fettamine, Diole und aliphatischen Dicarbonsäuren werden Polykondensationsverbindungen (oxalkylierte Polyesteramine) entsprechend der nachstehenden Formel I erhalten

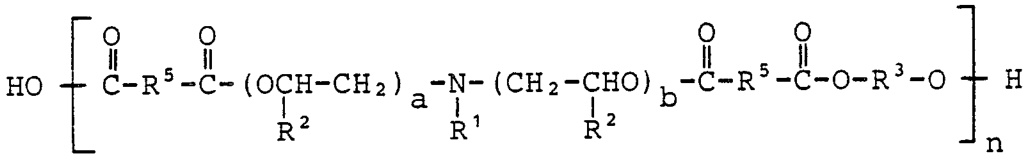

(I),

worin

$R^1$ ein Alkylrest oder Alkenylrest von 8 bis 23 C-Atomen ist,

$R^2$ H oder $CH_3$ ist und innerhalb der Kette des Polyoxalkylenrestes, in Blöcken angeordnet, auch beide Bedeutungen annehmen kann,

$R^3$ ein Alkylenrest der Formel $-(CH_2)_x-$ ist, in der x eine ganze Zahl von 1 bis 6 ist, oder ein Polyoxalkylenrest der Formel

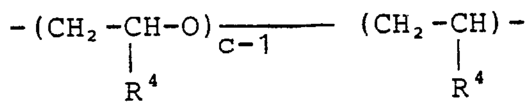

ist, in der $R^4$ H oder $CH_3$ bedeutet und innerhalb der Kette, statistisch oder in Blöcken angeordnet, auch beide Bedeutungen annehmen kann, und c eine ganze oder gebrochene Zahl von 2 bis 80 bedeutet,

$R^5$ ein Alkylenrest der Formel $-(CH_2)_y-$ ist, in der y eine ganze Zahl von 1 bis 8 bedeutet, wobei dieser Alkylenrest gegebenenfalls 1 bis 2 OH-Gruppen tragen kann, oder ein Vinylenrest ist,

a und b, gleich oder verschieden, ganze oder gebrochene Zahlen von 1 bis 15 sind, und

n eine ganze Zahl ist, die Werte von 2 bis 50 annehmen kann.

Quaternisiert man die Polykondensate entsprechend Formel I, werden quaternäre Polykondensationsverbindungen der nachstehenden Formel II erhalten:

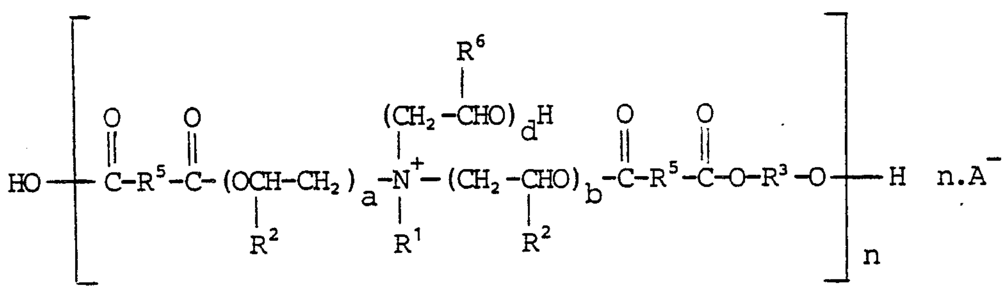

(II),

worin

$R^1$, $R^2$, $R^3$, $R^5$, a, b und n die bei Formel I angegebenen Bedeutungen haben,

$R^6$ H oder $CH_3$ ist,

$A^-$ das Anion einer Carbonsäure mit 2 bis 6 C-Atomen, einer Hydroxycarbonsäure mit 2 bis 6 C-Atomen und 1 bis 3 OH-Gruppen oder das Anion der Benzoesäure, der Salicylsäure oder der Phosphorsäure ist, und

d eine ganze oder gebrochene Zahl von 1 bis 2 ist.

Die Definitionen in den Formel I und II haben vorzugsweise die folgenden Bedeutungen:

$R^1$ ist ein Alkylrest von 12 bis 18 C-Atomen; $R^2$ ist H und a und b, gleich oder verschieden, sind ganze oder gebrochene Zahlen von 1 bis 8; $R^3$ ist der Rest eines Block-Mischpolymerisates, bestehend aus mindestens einem Block von Ethylenoxid-Einheiten und mindestens einem Block von Propylenoxid-Einheiten, wobei die Gesamtzahl der Ethylenoxid-Einheiten eine ganze oder gebrochene Zahl von 15 bis 35, die der Propylenoxid-Einheiten eine solche von 20 bis 40 ist und die Summe aus beiden höchstens 60 beträgt; $R^5$ ist ein Alkylenrest der Formel $-(CH_2)_y-$, worin y eine ganze Zahl von 1 bis 8 bedeutet; $R^6$ ist H; n ist eine ganze Zahl, die Werte von 2 bis 20 annehmen kann. Die Zahlen a, b, c und d stellen Mittelwerte dar.

Aus den Formel I und II ergibt sich, daß als oxalkylierte primäre Fettamine vorzugsweise solche der nachstehenden Formel

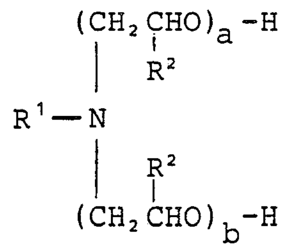

eingesetzt werden, worin $R^1$, $R^2$, a und b die angegebene Bedeutung haben, als Diole vorzugsweise solche der Formel HO-$R^3$-OH, worin $R^3$ die angegebene Bedeutung hat, und als aliphatische Dicarbonsäuren vorzugsweise solche der Formel HOOC-$R^5$-COOH, worin $R^5$ die angegebene Bedeutung hat. Das Molverhältnis von oxalkyliertem primärem Fettamin zu Diolverbindung beträgt im allgemeinen 1 : 3 bis 3 : 1, vorzugsweise 1 : 1 bis 3 : 1, und das Molverhältnis der Summe oxalkyliertes primäres Fettamin plus Diolverbindung zu Dicarbonsäure beträgt im allgemeinen 0,8 : 1 bis 1 : 0,8, vorzugsweise 1 : 0,8 bis 1 : 0,95. Die drei Ausgangsverbindungen, oxalkyliertes primäres Fettamin, Diol und Dicarbonsäure sind bekannt und im Handel erhältlich. Bevorzugte primäre Amine, die zu den Ausgangsverbindungen oxalkyliert werden, sind die technisch verfügbaren Produkte Stearylamin oder Cocosamin. Es ist aber ebensogut möglich, andere Monoamine mit mehr oder weniger breiter Alkylkettenverteilung oder Amine mit einheitlicher Kette zu verwenden. Es können auch Fettamine einzeln oder im Gemisch zur Oxalkylierung eingesetzt werden, deren Ketten eine oder mehrere Doppelbindungen enthalten, wie beispielsweise die Reste Öl-, Elaidin-, Linol- oder Linolensäure. Die oxalkylierten primären Fettamine stellen eine stickstoffhaltige, veresterungsfähige Diolkomponente dar. Im Gemisch damit wird eine weitere Diolverbindung eingesetzt, die keinen Stickstoff enthält, vorzugsweise eine solche der oben angegebenen Formel HO-$R^3$-OH. Besonders bevorzugte Diolverbindungen sind Blockpolymerisate, in denen an einem Propylenoxid-Block beidseitig Ethylenoxid-Blöcke gebunden sind, wobei dafür die vorstehend angegebenen Gesamtzahlen an Ethylenoxid-Einheiten und Propylenoxid-Einheiten gelten. Beide Diolkomponenten werden mit einer Dicarbonsäure der angegebenen Formel HOOC-$R^5$-COOH verestert. Geeignete aliphatische Dicarbonsäuren sind also die Malonsäure, Bernsteinsäure, Glutarsäure, Adipinsäure oder die Sebacinsäure, aliphatische Dicarbonsäuren, die durch ein bis zwei OH-Gruppen substituiert sind, beispielsweise die Äpfelsäure und die Weinsäure, und die Fumarsäure oder die Maleinsäure. Besonders geeignet sind die aliphatischen Dicarbonsäuren mit 4 bis 8 C-Atomen im Alkylenrest, das heißt die homologe Reihe von der Adipin- bis zur Sebacinsäure. Es können auch Derivate solcher Dicarbonsäuren, insbesondere deren Ester und Säurehalogenide, eingesetzt werden.

Die oben erwähnte Quaternisierung der nach dem erfindungsgemäßen Verfahren erhaltenen Polykondensate zu quaternären Polykondensationsverbindungen erfolgt vorzugsweise dadurch, daß das Polykondensat (das ist ein oxalkyliertes Polyesteramin) mit Ethylenoxid oder Propylenoxid in Gegenwart einer Carbonsäure mit 2 bis 6 C-Atomen, einer Hydroxycarbonsäure mit 2 bis 6 C-Atomen und 1 bis 3 OH-Gruppen, der Benzoesäure, der Salicylsäure oder der Phosphorsäure umgesetzt wird. Die Quaternisierungsreaktion wird vorzugsweise bei einer Temperatur von 75 bis 85 °C in einem geeigneten Rührautoklaven durchgeführt, wobei ein maximaler Reaktionsdruck von etwa 260 Pa zweckmäßigerweise nicht überschritten werden sollte. Dabei wird zur Salzbildung mit einer äquivalenten Menge (entsprechend der Zahl der N-Atome) einer derjenigen Carbonsäuren oder Mineralsäuren umgesetzt, die den oben definierten Anionen $A^-$ zugrunde liegen. Bevorzugte Carbonsäuren und Mineralsäuren sind Milchsäure, Weinsäure und die Phosphorsäure.

Die Erfindung wird nun an Beispielen noch näher erläutert.

Beispiel 1

In einem 0,5 1 Reaktionskolben, versehen mit Wasserabscheider, Gaseinleitungsrohr und Heizung, wurden 273,7 g (0,1 mol) eines Blockpolymeren aus 32 mol Propylenoxid und 28 mol Ethylenoxid, 89,4 g (0,1 mol) Stearylamin ethoxyliert mit 15 mol Ethylenoxid, 24,9 g (0,17 mol) Adipinsäure, 0,4 g (0,1 Gew.-%) Polybutyltitanat der Formel $C_4H_9O[Ti(OC_4H_9)_2O]_5C_4H_9$, gelöst in 2 g (0,5 Gew.-%) von einer (bei Raumtemperatur flüssigen) aromatischen Kohlenwasserstoff-Mischung mit einem Siedepunkt (bei Atmosphärendruck) im Bereich von etwa 200 bis 210 °C und 1,7 g (0,4 Gew.-%) Methansulfonsäure (Katalysatorsäure) vorgelegt. Die Mischung wurde unter Rühren und unter Stickstoffatmosphäre auf 160 °C erhitzt und bei dieser Temperatur unter kontinuierlicher Entfernung des Reaktionswassers so lange gehalten, bis ein

Umsatz der Veresterungsreaktion von 98 % vorlag. Dieser praktisch vollständige Umsatz war nach 7 Stunden Reaktionszeit erreicht. (Die Reaktion wurde durch die Ermittlung der Amin- und Säurezahl verfolgt - Die angegebenen Gewichtsprozente beziehen sich, wie in der Erfindungsbeschreibung bereits gesagt worden ist, auf die Gewichtssumme Blockpolymeres, ethoxyliertes Stearylamin und Adipinsäure.)

Beispiele 2 bis 9 und Vergleichsbeispiele I bis III

Diese Beispiele und Vergleichsbeispiele wurden analog Beispiel 1 durchgeführt. Die drei Reaktionskomponenten wurden jeweils im gleichen Molverhältnis wie in Beispiel 1 eingesetzt. Es wurde auch immer Adipinsäure als Dicarbonsäure und das genannte Blockpolymere aus 32 mol Propylenoxid und 28 mol Ethylenoxid als Diolverbindung eingesetzt; was die Aminverbindung betrifft, wurde in den Beispielen 6 bis 9 und im Vergleichsbeispiel III jene des Beispiels 1, in den Beispielen 2 und 3 und im Vergleichsbeispiel I Stearylamin ethoxyliert mit 8 mol Ethylenoxid und in den Beispielen 4 und 5 und im Vergleichsbeispiel II Cocosamin ethoxyliert mit 20 mol Ethylenoxid eingesetzt. Es wurde auch jeweils das Lösungsmittel des Beispiels 1 eingesetzt, nämlich eine aromatische Kohlenwasserstoff-Mischung mit einem Siedepunkt von 200 bis 210 °C.

In der nachstehenden Tabelle sind die erfindungsgemäßen Beispiele 1 bis 9 und die Vergleichsbeispiele I bis III zusammengefaßt. Die Tabelle enthält die Art und die Menge des Katalysators, die Menge an Lösungsmittel, die Art und die Menge der Katalysatorsäure, den Umsatz und die dafür erforderliche Reaktionszeit in Stunden.

TABELLE

| Beispiele | Katalysator | | Lösungsmittel | Katalysatorsäure | | Umsatz | Reaktionszeit |
|---|---|---|---|---|---|---|---|
| | Art | Gew.-% | Gew.-% | Art | Gew.-% | % | Stunden |
| 1 | Ti-2 | 0,1 | 0,5 | Säure-2 | 0,4 | 98 | 7 |
| 2 | Ti-2 | 0,2 | 1,0 | - | - | 97 | 10 |
| 3 | Ti-1 | 0,2 | 1,0 | - | - | 97 | 10 |
| 4 | Ti-2 | 0,2 | 1,0 | - | - | 93 | 9 |
| 5 | Ti-1 | 0,2 | 1,0 | - | - | 93 | 9 |
| 6 | Ti-2 | 0,2 | 1,0 | - | - | 97 | 8 |
| 7 | Ti-1 | 0,2 | 1,0 | - | - | 98 | 9 |
| 8 | Ti-2 | 0,2 | - | Säure-2 | 0,4 | 93 | 11 |
| 9 | Ti-1 | 0,1 | 1,0 | Säure-1 | 0,2 | 98 | 8 |
| Vergleichsbeispiele | | | | | | | |
| I | - | - | 1,0 | Säure-1 | 0,2 | 88 | 20 |
| II | - | - | 0,5 | Säure-2 | 0,4 | 68 | 19 |
| III | - | - | 1,0 | Säure-2 | 0,4 | 68 | 19 |

Ti-1 = $(C_4H_9O)_4Ti$ (n-Butyltitanat)
Ti-2 = $C_4H_9O[Ti(OC_4H_9)_2O]_5C_4H_9$ (Butylpolytitanat)
Säure-1 = Unterphosphorige Säure ($H_3PO_2$)
Säure-2 = Methansulfonsäure ($CH_3SO_3H$)

**Ansprüche**

1. Verfahren zur Herstellung von Polykondensationsverbindungen aus einem oxalkylierten primären Fettamin, einem Diol und einer aliphatischen Dicarbonsäure durch Reaktion eines oxalkylierten primären Fettamins und eines Diols mit einer aliphatischen Dicarbonsäure in Gegenwart eines Katalysators, dadurch gekennzeichnet, daß als Katalysator mindestens eine organische Verbindung eines Metalles aus der Gruppe Titan, Zirkon, Hafnium und Thorium eingesetzt wird.

2. Verfahren nach Anspruch 1, dadurch gekennzeichnet, daß als Katalysator mindestens eine Titanorganische Verbindung eingesetzt wird.

3. Verfahren nach Anspruch 1, dadurch gekennzeichnet, daß als Katalysator mindestens eine Titanorganische Verbindung aus der Gruppe der Alkyltitanate und Alkylpolytitanate eingesetzt wird, wobei die Alkyltitanate der Formel $Ti(OR)_4$ und die Alkylpolytitanate der Formel $RO-[Ti(OR)_2O]_{n}-R$ entsprechen, worin R eine Alkylgruppe mit 1 bis 18 C-Atomen und n eine Zahl von 1 bis 10 ist.

4. Verfahren nach einem der Ansprüche 1 bis 3, dadurch gekennzeichnet, daß der Katalysator in einer Menge von 0,05 bis 2 Gew.-%, bezogen auf die Gewichtssumme aus Fettamin, Diol und Dicarbonsäure, eingesetzt wird.

5. Verfahren nach einem der Ansprüche 1 bis 4, dadurch gekennzeichnet, daß der Katalysator in Kombination mit einem Lösungsmittel aus der Gruppe der aromatischen Kohlenwasserstoffe eingesetzt wird.

6. Verfahren nach einem der Ansprüche 1 bis 4, dadurch gekennzeichnet, daß der Katalysator in Kombination mit einem Lösungsmittel aus der Gruppe der aromatischen Kohlenwasserstoffe und mit einer Mineralsäure oder Sulfonsäure als Katalysatorsäure eingesetzt wird.

7. Verfahren nach Anspruch 1, dadurch gekennzeichnet, daß das Fettamin, das Diol und die Dicarbonsäure und der Katalysator in einer Menge von 0,05 bis 2 Gew.-%, bezogen auf die Gewichtssumme aus Fettamin, Diol und Dicarbonsäure, und zusätzlich dazu ein Lösungsmittel für den Katalysator aus der Gruppe der aromatischen Kohlenwasserstoffe mit einem Siedepunkt im Bereich von 190 bis 250 °C in einer Menge von 0,1 bis 5 Gew.-%, bezogen auf die Gewichtssumme aus Fettamin, Diol und Dicarbonsäure, und eine Mineralsäure oder Sulfonsäure in einer Menge von 0,05 bis 2 Gew.-%, bezogen auf die Gewichtssumme aus Fettamin, Diol und Dicarbonsäure, in einem Reaktionsgefäß auf 150 bis 180 °C erhitzt werden und die Mischung bei dieser Temperatur unter Entfernung des Reaktionswassers bis zum angestrebten Umsetzungsgrad der Reaktion gehalten wird.